Europäisches Patentamt

**European Patent Office**

Office européen des brevets

(11) Veröffentlichungsnummer : **0 133 653**
**B1**

(12)

# EUROPÄISCHE PATENTSCHRIFT

(45) Veröffentlichungstag der Patentschrift :
07.05.86

(21) Anmeldenummer : **84108070.8**

(22) Anmeldetag : **10.07.84**

(51) Int. Cl.⁴ : **B 60 T 15/52**

(54) **Steuerventil für Druckluftbremsen von Schienenfahrzeugen.**

(30) Priorität : **02.08.83 DE 3327903**

(43) Veröffentlichungstag der Anmeldung :
**06.03.85 Patentblatt 85/10**

(45) Bekanntmachung des Hinweises auf die Patenterteilung : **07.05.86 Patentblatt 86/19**

(84) Benannte Vertragsstaaten :
**CH DE FR GB LI**

(56) Entgegenhaltungen :
**DE-B- 1 021 878**
**DE-C-   964 508**
**US-A- 3 554 615**

(73) Patentinhaber : **KNORR-BREMSE AG**
**Moosacher Strasse 80 Postfach 401060**
**D-8000 München 40 (DE)**

(72) Erfinder : **Goritz, Berd**
**Josefastrasse 6**
**D-8044 Lohhof (DE)**
Erfinder : **Huber, Johann**
**Ohlmüllerstrasse 14**
**D-8000 München 90 (DE)**
Erfinder : **Meinicke, Peter**
**Kreuzlingerforststrasse 27**
**D-8035 Gauting (DE)**

**Beschreibung**

Die Erfindung bezieht sich auf ein Steuerventil für Druckluftbremsen von Schienenfahrzeugen, mit einem ein von den Drücken in einer Hauptluftleitung, in einem Behälter konstanten Druckes und in einem Bremszylinder beaufschlagtes Kolbensystem umfassenden Dreidrucksteuerventil zur Steuerung der Bremszylinderbeaufschlagung und mit einer Angleichvorrichtung, die einen Angleichbehälter und ein Angleichventil umfaßt, wobei das Angleichventil einen vom Druck in der Hauptluftleitung entgegen dem Druck im Angleichbehälter beaufschlagten Kolben, eine eine unter Vorspannung abgefangene Feder beinhaltende Puffervorrichtung für den Kolben und eine vom Kolben schaltbare Ventileinrichtung aufweist und die Ventileinrichtung in drei Schaltstellungen zum Füllen des Angleichbehälters aus dem Behälter konstanten Druckes, Absperren des Angleichbehälters und Entleeren des Angleichbehälters einstellbar ist.

Ein die vorstehend genannten Merkmale aufweisendes Steuerventil ist aus der US-A-3 554 615 bekannt. Der nach Einstellen einer Nachbremsstellung mit unterhalb der eine Vollbremsung bewirkenden Druckhöhe liegenden Druck in der Hauptluftleitung durch Druckausgleich zwischen der Kammer konstanten Druckes und dem zuvor zumindest teilweise entleerten Angleichbehälter bewirkbare Angleichvorgang dient der Anpassung des Steuerventils an erniedrigte Regeldruckhöhen in der Hauptluftleitung, wie es beispielsweise beim Wechsel von Lokomotiven oder auch beim Wechsel der Zugart, in welche das das Steuerventil aufweisende Schienenfahrzeug eingestellt ist, vorkommt ; durch den erwähnten Druckausgleich wird der Druck im Behälter konstanten Druckes ausreichend abgesenkt, um ein vollständiges Bremsenlösen auch bei erniedrigter Regeldruckhöhe in der Hauptluftleitung erzielen und ein Angleichen des Druckes im Behälter konstanten Druckes an die neue, erniedrigte Regeldruckhöhe bewirken zu können. Die Ventileinrichtung des bekannten Angleichventiles weist einen viele Dichtstellen aufweisenden, komplizierten Ventilschieber auf, ihre Reibungsverhältnisse und Schalthysterese sind daher nur schlecht beherrschbar, und es ist ein beachtlicher Bauaufwand und eine regelmäßige Wartung erforderlich. Die Puffervorrichtung weist in dem vom Hauptluftleitungsdruck gefüllten Beaufschlagungsraum für den Kolben eine vorgespannte Feder auf, welche sich einerseits unmittelbar am Kolben abstützt und welche andererseits an einem Federteller abgefangen ist, der durch einen Anschlag am Kolben in Abspreizrichtung von diesem gehalten ist ; in der Mittelstellung des Kolbens gelangt der Federteller zum Anschlag an einer Gehäusewandung. Die bekannte Angleichvorrichtung arbeitet bei jeder Betriebs- oder Vollbremsung : Sie entlüftet hierbei zu Bremsbeginn den Angleichbehälter in den Bremszylinder, schließt sodann den Angleichbehälter ab und bewirkt beim Bremsenlösen ein erneutes Aufladen des Angleichbehälters auf die Regeldruckhöhe ; hierdurch wird neben einem häufigen, verschleißbedingenden Arbeiten des Angleichventils unnötig Druckluft und damit Energie verbraucht und beim Lösen das Wiederaufladen der Druckluftbremse auf volle Regeldruckhöhe verzögert. Während Schnellbremsungen bzw. beim Einstellen eines Nachbremsbereiches mit relativ niedrigem Hauptluftleitungsdruck wird der Angleichbehälter mit dem Bremsluftbehälter verbunden und dadurch in seinem Druck relativ weit abgesenkt, beim nachfolgenden Bremsenlösen wird ein Druckausgleich zwischen der Kammer konstanten Druckes und dem Nachbremsbehälter bewirkt, wodurch sich eine beachtliche Druckabsenkung in der Kammer konstanten Druckes einstellt. Falls nun mehrere Schnellbremsungen bzw. Nachbremseinstellungen mehrmals rasch hintereinander folgen, kann der Druck im Bremsluftbehälter relativ weit abfallen, wodurch sich nachfolgend auch für die Kammer konstanten Druckes ständig weiter abfallende Ausgleichsdruckhöhen ergeben, es ist hierdurch die Gefahr einer Erschöpfung für das Steuerventil gegeben, d. h., es ist durch mangelnden Druck in der Kammer konstanten Druckes keine maximale Bremsung mehr einsteuerbar. Schließlich ist beim bekannten Steuerventil das Angleichventil lediglich durch Reibung des erwähnten Schieberventils in seiner Sollstellung, einer der Kolbenendstellungen, gehalten ; durch Fahrstöße kann sich das Angleichventil aus dieser Endstellung ungewollt bis in die Mittelstellung des Kolbens verschieben, wodurch unerwünschte Schaltvorgänge ausgelöst werden können.

Bei einem von den eingangs genannten Merkmalen abweichenden Bremssteuersystem nach der DE-A-2 004 310 wird zu Bremsbeginn, während des sog. Bremsansprunges, in Abhängigkeit von der Aufladung eines aus der Hauptluftleitung zu füllenden Beschleunigungsbehälters über ein besonderes Ventil die Kammer kontanten Druckes mit dem Angleichbehälter verbunden, es ergibt sich hierdurch bereits zu Bremsbeginn eine Druckabsenkung in der Kammer konstanten Druckes, wodurch sich eine Verschiebung der Bremsstufeneinstellung und damit eine Störung des Zusammenwirkens dieses Bremssteuersystems mit andersartigen, üblichen Bremssystemen ergibt.

Es ist Aufgabe der Erfindung, ein Steuerventil der eingangs genannten Art mit einfachen Mitteln derart auszugestalten, daß ohne unnötigen Druckluftverbrauch und ohne Erschweren des Wiederaufladens der Druckluftbremse beim Bremsenlösen ein einfaches und sicheres Angleichen nur in der sog. Nachbremsstellung möglich ist, wobei durch Vermeiden unnötiger Schalthübe und damit unnötigen Verschleißes lange, wartungsfreie Betriebszeiten möglich sind und wobei des weiteren die Möglichkeit gegeben ist, mit sehr einfachen Mitteln jegliche Erschöpfungsgefahr für die Druckluftbremse auszuschließen und im Ruhezustand die Angleichvorrichtung sicher in der Sollstellung, durch Fahrstöße nicht ungewollt verstellbar, zu halten.

Diese Aufgabe wird nach der Erfindung dadurch gelöst, daß das Angleichventil zwei Ventile aufweist, deren erstes, das Füllen des Angleichbehälters überwachende Ventil bei Auslenkung des Kolbens unter überwiegender Beaufschlagung vom Hauptluftleitungsdruck aus einer Mittelstellung in einer Hubrichtung öffnet und deren zweites, das Entleeren des Angleichbehälters in die Atmosphäre überwachende Ventil bei Auslenkung des Kolbens unter überwiegender Beaufschlagung vom Druck des Angleichbehälters aus der Mittelstellung in die entgegengesetzte Hubrichtung öffnet, und daß die Puffervorrichtung den Kolben ausschließlich in Rückstellrichtung aus der Öffnungsstellung für das zweite Ventil in die Mittelstellung belastet.

Den abhängigen Ansprüchen sind vorteilhafte Ausbildungsmöglichkeiten für ein nach der Erfindung ausgestaltetes Steuerventil entnehmbar.

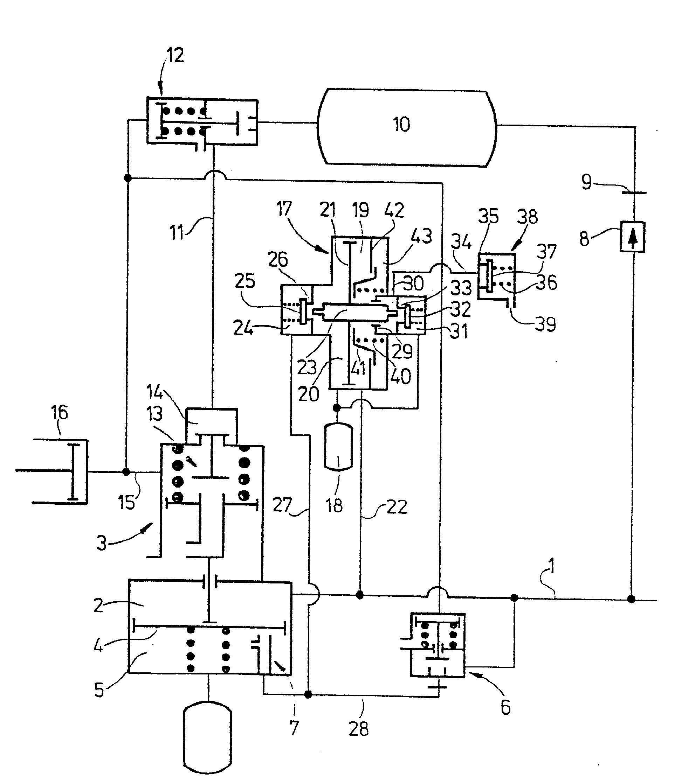

In der Zeichnung ist als Ausführungsbeispiel für die Erfindung ein nach der Erfindung ausgebildetes Steuerventil schematisch in seinen für die Erfindung wesentlichen Teilen dargestellt.

An eine Hauptluftleitung 1 ist die Steuerkammer 2 eines Dreidrucksteuerventils 3 angeschlossen. Ein Steuerkolben 4 trennt die Steuerkammer 2 von einer Kammer konstanten Druckes 5 ab, welche aus der Hauptluftleitung 1 über ein sich während Bremsungen schließendes Überwachventil 6 und eine Füllstoßeinrichtung 7 füllbar ist. Weiterhin ist an die Hauptluftleitung 1 über eine als Rückschlagventil 8 und Drossel 9 dargestellte Überwacheinrichtung ein Bremsluftvorratsbehälter 10 angeschlossen, von welchem eine Leitung 11 über ein Höchstdruckbegrenzungsventil 12 zu einem der Ventileinrichtung 13 des Dreidrucksteuerventils 3 unmittelbar vorgeordneten Eingangsraum 14 führt. Weiterhin steht das Dreidrucksteuerventil 2 über eine Leitung 15 mit einem Bremszylinder 16, dem Höchstdruckbegrenzungsventil 12 und dem Überwachventil 6 in Verbindung.

Insoweit entspricht der Aufbau und die Funktionsweise des Steuerventils demjenigen nach der DE-C-1 021 878 und braucht daher hier nicht weiter erläutert zu werden.

Weiterhin sind ein Angleichventil 17 und ein Angleichbehälter 18 vorgesehen, welche miteinander eine Angleichvorrichtung 17, 18 bilden. Das Angleichventil 17 weist einen zwei Räume 19, 20 voneinander trennenden Kolben 21 auf, der Raum 19, der sich gemäß der Zeichnung rechts des Kolbens 21 befindet, ist über eine Leitung 22 an die Hauptluftleitung 1 angeschlossen und der andersseitige Raum 20 steht in ständiger Verbindung mit dem Angleichbehälter 18. Der Kolben 21 ist mit einem ihn durchsetzenden Ventilstößel 23 verbunden, auf Seiten des Raumes 20 endet der Ventilstößel 23 vor einer in einem Raum 24 befindlichen, federbelasteten Ventilplatte 25, welche mit einem gehäusefesten Ventilsitz 26 ein in Schließrichtung federbelastetes, eine Verbindung der Räume 24 und 20 überwachendes Stößelventil 25, 26 bildet. Der Raum 24 ist über eine Leitung 27 mit einem sich vom Überwachventil 6 zur Füllstoßschutzeinrichtung 7 erstreckenden Leitungsabschnitt 28 und damit durch die Füllstoßschutzeinrichtung 7 mit der Kammer konstanten Druckes 5 verbunden. Auf Seiten des Raums 19 durchragt der Ventilstößel 23 abgedichtet verschieblich eine Gehäusetrennwand 29 und endet in einem Raum 30 vor einer sich in einem Raum 31 befindenden Ventilplatte 32 ; die Ventilplatte 32 ist federbelastet und bildet mit einem gehäusefesten Ventilsitz 33 ein in Schließrichtung federbelastetes, eine Verbindung zwischen den Räumen 30 und 31 überwachendes Stößelventil 32, 33. Der Raum 31 ist ständig an den Angleichbehälter 18 angeschlossen, und vom Raum 30 führt eine Leitung 34 zu einem als federbelastetes Rückschlagventil mit einem Ventilsitz 35 und einer gegen diesen durch eine Feder 36 angedrückten Ventilplatte 37 ausgebildeten Rückhalteventil 38 und von diesem durch eine Öffnung 39 zur Atmosphäre ; die Leitung 34 mündet dabei in den vom Ventilsitz 35 umschlossenen Raum des Rückhalteventils 38. Im Raum 19 des Angleichventils 17 befindet sich eine Feder 40, welche sich kolbenabseitig gehäusefest abstützt und kolbenseitig an einem den Ventilstößel 23 mit Spiel umgebenden Federteller 41 anliegt. Der Federteller 41 ist abgekröpft ausgebildet und hintergreift einen gehäusefesten Anschlagring 42, derart, daß er durch einen Anschlag 43 in Bewegungsrichtung zum Kolben 21 hin bei vorgespannter Feder 40 abfangbar ist.

In der dargestellten Ruhestellung befindet sich der Kolben 21 in einer Mittelstellung, in welcher beide Stößelventile 25, 26 und 32, 33 geschlossen sind und der Federteller 41 durch geschlossenen Anschlag 43 bei vorgespannter Feder 40 abgefangen sich kurz vor dem Kolben 21 befindet.

Bei gelöster Bremse mit auf eine Regeldruckhöhe aufgeladener Hauptluftleitung herrschen auch im Raum 19 und durch zeitweiliges Öffnen des Stößelventils 25, 26 auch im Raum 20 des Angleichventils Regeldruckhöhe. Wird in die Hauptluftleitung 1 eine Druckabsenkung bis zu einer bestimmten, mittleren Druckhöhe eingesteuert, wie es zum Bewirken von Betriebsbremsungen und Vollbremsungen erforderlich ist, sinkt der im Raum 19 herrschende Druck mit dem Hauptluftleitungsdruck ab, am Kolben 21 entsteht durch die im Raum 20 verbleibende Regeldruckhöhe eine nach rechts gerichtete Kraft, welche den Kolben 21 an den Federteller 41 anlegt, jedoch die vorgespannte Feder 40 nicht zu komprimieren vermag. Der Kolben 21 verbleibt damit zumindest nahezu in Ruhe, und die beiden Stößelventile 25, 26 und 32, 33 bleiben geschlossen. Der im Raum 20 und im Angleichbehälter 18 herrschende Druck verbleibt also während Betriebsbremsungen und Vollbremsungen auf Regeldruckhöhe, es wird nicht unnütz Druckluft verbraucht, und beim nachfolgenden Lösen mit Wiederaufladen der Hauptluftleitung 1 und des Raumes 19 auf Regeldruckhöhe ist es nicht erforderlich, zuvor unnötig entleerte Räume wieder aufzuladen ; das Lösen kann damit ungehindert durch unnötige Aufladungsvorgänge erfolgen.

Wird der Druck in der Hauptluftleitung 1 unter die erwähnte, mittlere Druckhöhe abgesenkt, wie es zum Einstellen eines Nachbremsbereiches oder während Schnellbremsungen erfolgt, so reicht der am Kolben 21 zwischen den Räumen 19 und 20 auftretende Differenzdruck aus, um den Kolben 21 unter Mitnahme des Federtellers 41, Lösen des Anschlages 43 und Komprimieren der Feder 40 nach rechts zu verschieben, wobei der Stößel 23 gegen die Ventilplatte 32 anschlägt und letztere entgegen ihrer Federbelastung vom Ventilsitz 33 abhebt. Das Stößelventil 32, 33 wird damit geöffnet, und aus dem Angleichbehälter und dem Raum 20 strömt durch den Raum 31, das geöffnete Stößelventil 32, 33, den Raum 30 und die Leitung 34 Druckluft zum vom Ventilsitz 35 umschlossenen Raum des Rückhalteventils 38 ab, unter der Ventilplatte 37 baut sich ein Druck auf, der die Ventilplatte 37 entgegen der Kraft der Feder 36 vom Ventilsitz 35 abhebt, und die erwähnte Druckluft strömt durch die Öffnung 39 zur Atmosphäre ab. Durch diese Druckluftabströmung ergibt sich im Angleichbehälter 18 und im Raum 20 eine Druckabsenkung, durch welche die am Kolben 21 anstehende Druckdifferenz vermindert wird, bis bei nicht vollständig entleerter Hauptluftleitung 1 der im Raum 19 noch anstehende Druck, unterstützt durch die Kraft der Feder 40, ausreicht, den Kolben 21 unter Schließen des Stößelventils 32, 33 in die dargestellte Mittellage zurückzuschieben. Damit wird die Druckluftabströmung aus dem Angleichbehälter 18 und dem Raum 20 durch die Öffnung 39 zur Atmosphäre unterbrochen. Das Wiederschließen des Stößelventils 32 und 33 und die Höhe des verbleibenden Restdruckes im Angleichbehälter 18 und im Raum 20 ist abhängig von der in der Hauptluftleitung 1 herrschenden Druckhöhe, welche sich im Nachbrems-Druckbereich zwischen der erwähnten, mittleren Druckhöhe und Atmosphärendruck befindet. Bei völliger Entleerung der Hauptluftleitung 1 sinkt der im Angleichbehälter 18 herrschende Druck bei geöffnetem Stößelventil 32, 33 so lange ab, bis die Feder 36 die Ventilplatte 37 wieder auf den Ventilsitz 35 zu drücken vermag und der im vom Ventilsitz 35 umschlossenen Raum und damit im Angleichbehälter 18 herrschende Druck nicht mehr zum Abheben der Ventilplatte 37 vom Ventilsitz 35 ausreicht. Bei weiterhin geöffnetem Stößelventil 32, 33 wird damit die Entlüftung des Angleichbehälters 18 unterbrochen und in diesem verbleibt eine bestimmte, festgelegte Restdruckhöhe.

Beim nachfolgenden Wiederaufladen der Hauptluftleitung 1 wird mit dieser auch der Raum 19 aufgeladen, die am Kolben 21 herrschende Druckdifferenz verringert sich, und das gegebenenfalls noch geöffnete Stößelventil 32, 33 wird beim Zurückbewegen des Kolbens 21 in die dargestellte Mittellage geschlossen. Nach Erreichen eines Druckgleichgewichtes zwischen den Räumen 19 und 20 beginnt sich eine umgekehrte Druckdifferenz mit überwiegendem Druck im Raum 19 am Kolben 21 aufzubauen, diese Druckdifferenz vermag nahezu sofort den Kolben 21 unter Öffnen des Stößelventils 25, 26 nach links zu verschieben, und aus der Kammer konstanten Druckes 5 strömt durch die Füllstoßeinrichtung 7, den Leitungsabschnitt 28, die Leitung 27, den Raum 24 und das geöffnete Stößelventil 25, 26 Druckluft in den Raum 20 und den Angleichbehälter 18 ein, bis zwischen der Kammer konstanten Druckes 5 und dem Angleichbehälter 18 schließlich ein Druckausgleich erreicht wird, wobei der Ausgleichsdruck um einen beachtlichen Wert unterhalb der Regeldruckhöhe liegt. Die Hauptluftleitung 1 und der Raum 19 wurden währenddessen ebenfalls bis auf zumindest diese Ausgleichsdruckhöhe aufgeladen. Bei weiterem Druckanstieg in der Hauptluftleitung 1 wird der Steuerkolben 4 des Dreidrucksteuerventils 3 entgegen dem verminderten Druck in der Kammer konstanten Druckes 5 abwärts gedrückt, wodurch das Dreidrucksteuerventil 3 in seine Lösestellung gelangt und den zuvor druckbeaufschlagten Bremszylinder 16 entlüftet. Beim Erreichen des Lösezustandes öffnet sich auch das zuvor während des Bremsvorganges geschlossene Überwachventil 6 und aus der Hauptluftleitung 1 werden die Kammer konstanten Druckes 5 und über das weiterhin geöffnete Stößelventil 25, 26 auch der Raum 20 und der Angleichbehälter 18 mit Druckluft aufgeladen. Dieser Aufladevorgang hält an, bis in der Hauptluftleitung 1 den gelösten Bremsen entsprechende Regeldruckhöhe erreicht ist ; diese Regeldruckhöhe kann von der vor dem beschriebenen Nachbrems- bzw. Schnellbremsvorgang herrschenden Regeldruckhöhe abweichen, insbesondere kann sie auch beachtlich niedriger als die zuvor herrschende Regeldruckhöhe liegen. Bei Erreichen der Regeldruckhöhe in der Kammer konstanten Druckes 5, dem Raum 20 und dem Angleichbehälter 18 klingt der am Kolben 21 anstehende Differenzdruck ab, die Federbelastung der Ventilplatte 25 vermag unter Zurückdrücken des Kolbens 21 in die dargestellte Mittellage das Stößelventil 25, 26 zu schließen, und der Löse- und Angleichvorgang ist damit beendet.

Es ist wesentlich, daß das Angleichventil 17 während Betriebs- und Vollbremsungen in Ruhe verbleibt und nur im Nachbremsbetrieb bzw. bei Schnellbremsungen zu arbeiten beginnt. Im Ruhezustand des Angleichventils 17 sind beide Stößelventile 25 und 26 und 32, 33 unter ihren Federbelastungen sicher geschlossen, und der Kolben 21 wird durch die Ventile und die Kraft der abgefangenen Feder 40 in seiner dargestellten Mittellage gehalten, durch Fahrstöße können keine unerwünschten Schaltvorgänge ausgelöst werden. Das Rückhalteventil 38 sichert bei Nachbremsvorgängen und bei Schnellbremsungen ein Zurückhalten einer ausreichenden Mindestdruckhöhe im Angleichbehälter 18, so daß beim nachfolgenden Druckausgleich mit der Kammer konstanten Druckes 5 ein bestimmter Mindestdruck nicht unterschritten wird und die Bremse nicht durch zu starke Druckabsenkung in der Kammer konstanten Druckes 5 erschöpfbar ist, auch falls mehrere Nachbremsvorgänge bzw. Schnellbremsungen einander rasch folgen. Selbstverständlich kann das in kompakter oder aufgegliederter Bauart gestaltbare Steuerventil mit weiteren, üblichen Vorrichtungen, beispielsweise einem lastabhängigen Relaisventil, einem Zugarteinstellgerät o. dgl. ergänzt werden.

Bezugszeichenliste

    1 Hauptluftleitung
    2 Steuerkammer
    3 Drucksteuerventil
    4 Steuerkolben
    5 Kammer konstanten Druckes
    6 Überwachventil
    7 Füllstoßschutzeinrichtung
    8 Rückschlagventil
    9 Drossel
    10 Bremskraftvorratsbehälter
    11 Leitung
    12 Höchstdruckbegrenzungsventil
    13 Ventileinrichtung
    14 Eingangsraum
    15 Leitung
    16 Bremszylinder
    17 Angleichventil
    18 Angleichbehälter
    19 Raum
    20 Raum
    21 Kolben
    22 Leitung
    23 Ventilstößel
    24 Raum
    25 Ventilplatte
    26 Ventilsitz
    25, 26 Stößelventil
    27 Leitung
    28 Leitungsabschnitt
    29 Gehäusetrennwand
    30 Raum
    31 Raum
    32 Ventilplatte
    33 Ventilsitz
    32, 33 Stößelventil
    34 Leitung
    35 Ventilsitz
    36 Feder
    37 Ventilplatte
    38 Rückhalteventil
    39 Öffnung
    40 Feder
    41 Federteller
    42 Anschlagring
    43 Anschlag

**Patentansprüche**

1. Steuerventil für Druckluftbremsen von Schienenfahrzeugen, mit einem ein von den Drücken in einer Hauptluftleitung (1), in einem Behälter konstanten Druckes (5) und in einem Bremszylinder (16) beaufschlagtes Kolbensystem umfassenden Dreidrucksteuerventil (3) zur Steuerung der Bremszylinderbeaufschlagung und mit einer Angleichvorrichtung, die einen Angleichbehälter (18) und ein Angleichventil (17) umfaßt, wobei das Angleichventil (17) einem vom Druck in der Hauptluftleitung (1) entgegen dem Druck im Angleichbehälter (18) beaufschlagten Kolben (21), eine eine unter Vorspannung abgefangene Feder (40) beinhaltende Puffervorrichtung für den Kolben (21) und eine vom Kolben (21) schaltbare Ventileinrichtung aufweist und die Ventileinrichtung in drei Schaltstellungen zum Füllen des Angleichbehälters (18) aus dem Behälter konstanten Druckes (5), Absperren des Angleichbehälter (18) und Entleeren des Angleichbehälters (18) einstellbar ist, dadurch gekennzeichnet, daß das Angleichventil (17) zwei Ventile (25, 26 ; 32, 33) aufweist, deren erstes, das Füllen des Angleichbehälters (18) überwachendes Ventil (25, 26) bei Auslenkung des Kolbens (21) unter überwiegender Beaufschlagung vom Hauptluftleitungsdruck aus einer Mittelstellung in einer Hubrichtung öffnet und deren zweites, das Entleeren des Angleichbehälters (18) in die Atmosphäre überwachendes Ventil (32, 33) bei Auslenkung des Kolbens (21) unter überwiegender Beaufschlagung vom Druck des Angleichbehälters (18) aus der Mittelstellung in die entgegengesetzte Hubrichtung öffnet, und daß die Puffervorrichtung den Kolben (21) ausschließlich in Rückstellrichtung aus der Öffnungsstellung für das zweite Ventil (32, 33) in die Mittelstellung belastet.

2. Steuerventil nach Anspruch 1, dadurch gekennzeichnet, daß die beiden Ventile als in Schließrichtung federbelastete Stößelventile (25, 26 ; 32, 33) ausgebildet und zu beiden Seiten des Kolbens (21) angeordnet sind.

3. Steuerventil nach Anspruch 1 oder 2, dadurch gekennzeichnet, daß die Puffervorrichtung eine im vom Hauptluftleitungsdruck beaufschlagten Beaufschlagungsraum (19) für den Kolben (21) angeordnete, sich kolbenseitig gegen einen in Verschieberichtung zum Kolben (21) vor dessen Mittelstellung durch einen Anschlag (43) gehäusefest abfangbaren Federteller (41) abstützende Feder (40) aufweist.

4. Steuerventil nach Anspruch 1, 2 oder 3, dadurch gekennzeichnet, daß zum Aufrechterhalten eines bestimmten Mindestdruckes im Angleichbehälter (18) bei geöffnetem zweiten Ventil (32, 33) zum zweiten Ventil (32, 33) ein Rückhalteventil (38) in Serie geschaltet ist.

5. Steuerventil nach Anspruch 4, dadurch gekennzeichnet, daß in eine vom zweiten Ventil (32, 33) zur Atmosphäre führende Verbindung (Leitung 34, Öffnung 39) als Rückhalteventil (38) ein in Schließrichtung federbelastetes (Feder 36) Rückschlagventil eingeordnet ist.

**Claims**

1. Control valve for compressed air brakes of rail vehicles, having a triple pressure control valve (3) incorporating a piston system acted on by the pressures in a main air line (1), in a container of constant pressure (5) and in a brake cylinder (16), for controlling the brake cylinder action, and having a compensating device which includes a compensating container (18) and a compensating valve (17), whereby the compensating valve (17) has a piston (21) acted upon by the pressure in the main air line (1) against the pressure in the compensating container (18), a buffer device for the piston (21) containing a spring (40) supported under pre-loading, and a valve device switchable by the piston (21), and the valve device can be adjusted into three switch positions for filling the compensating container (18) from the container of constant pressure (5), blocking the compensating container (18) and emptying the compensating container (18), characterised in that the compensating valve (17) has two valves (25, 26 ; 32, 33), the first of which valves (25, 26) monitoring the filling of the compensating container (18) opens, when the piston (21) is displaced under predominant load from the main air line pressure, from a middle position in a lifting direction, and the second of which valves (32, 33) monitoring the emptying of the compensating container (18) into the atmosphere opens, when the piston (21) is displaced under predominant load from the pressure of the compensating container (18), out of the middle position into the opposite lifting direction, and in that the buffer device acts on the piston (21) exclusively in the resetting direction out of the opening position for the second valve (32, 33) into the middle position.

2. Control valve according to claim 1, characterised in that the two valves are constructed as poppet valves (25, 26 ; 32, 33) spring-loaded in the closure direction and are arranged on both sides of the piston (21).

3. Control valve according to claim 1 or 2, characterised in that the buffer device has a spring (40) arranged in the admission chamber (19) for the piston (21) acted on by the main air line pressure, supported on the piston side by a stop (43) against a spring plate (41) which can be supported in housing-tight fashion in the displacement direction of the piston (21) in front of its middle position.

4. Control valve according to claim 1, 2 or 3, characterised in that to maintain a specific minimum pressure in the compensating container (18) when the second valve (32, 33) is open, a hold-back valve (38) is connected in series to the second valve (32, 33).

5. Control valve according to claim 4, characterised in that a non-return valve, spring-loaded (spring 36) in the closure direction, is inserted as a hold-back valve (38) into a connection (line 34, aperture 39) leading from the second valve (32, 22) to the atmosphere.

**Revendications**

1. Valve de commande pour freins à air comprimé de véhicules sur rails, avec une triple valve (3) pour la commande de la charge du cylindre de frein et comportant un système de piston chargé par les pressions qui règnent dans une conduite principale (1), dans un réservoir à pression constante (5) et dans un cylindre de frein (16), et avec un dispositif de compensation qui comporte un réservoir de compensation (18) et une valve de compensation (17), la valve de compensation (17) comprenant un piston (21) chargé par la pression qui règne dans la conduite principale (1), à l'encontre de la pression qui règne dans le réservoir de compensation (18), un dispositif tampon pour le piston, comportant un ressort (40) retenu avec tension préalable, et un dispositif à valve commutable par le piston (21), alors que le dispositif à valve est susceptible d'être réglé dans trois positions de commutation pour remplir le réservoir de commutation (18) à partir du réservoir à pression constante (5), pour fermer le réservoir de compensation (18) et pour vider le réservoir de compensation (18), caractérisée par le fait que la valve de compensation (17) comporte deux soupapes (25, 26 ; 32, 33) dont la première soupape (25, 26) qui contrôle le remplissage du réservoir de compensation (18), s'ouvre lors du déplacement du piston (21), sous l'effet d'une charge prédominante de la pression qui règne dans la conduite principale, d'une position médiane dans un sens du déplacement, et dont la seconde soupape (32, 33) qui contrôle l'évacuation du réservoir de compensation (18) dans l'atmosphère, s'ouvre lors du déplacement du piston (21), sous la charge prédominante de la pression qui règne dans le réservoir de compensation (18), de la position médiane dans le sens du déplacement opposé, et que le dispositif tampon charge le piston (21) exclusivement dans le sens de renvoi, de la position d'ouverture pour la seconde soupape (32, 33) dans la position médiane.

2. Valve de commande selon la revendication 1, caractérisée par le fait que les deux soupapes sont réalisées sous la forme de soupapes à poussoirs (25, 26 ; 32, 33) chargées par des ressorts dans le sens de la fermeture et sont disposées de part et d'autre du piston.

3. Valve de commande selon la revendication 1 ou 2, caractérisée par le fait que le dispositif tampon comporte un ressort (40) qui est disposé dans la chambre de charge (19) du piston (21), alimentée par la pression qui règne dans la conduite principale et qui prend appui, du côté du piston, sur une cuvette de ressort (41) retenue, dans le sens du déplacement vers le piston (21), avant la position médiane de ce dernier, par une butée (43) solidaire du carter.

4. Valve de commande selon la revendication 1, 2 ou 3, caractérisée par le fait que pour maintenir une pression minimale déterminée dans le réservoir de compensation (18), alors que la seconde soupape (32, 33) est ouverte, une soupape de retenue (38) est montée en série avec la seconde soupape (32, 33).

5. Valve de commande selon la revendication 4, caractérisée par le fait que dans la liaison (conduite 34, ouverture 39) menant de la seconde soupape (32, 33) à l'atmosphère, est disposée, en tant que soupape de retenue (38), une soupape de retenue qui est chargée élastiquement (ressort 36) dans le sens de la fermeture.